# EUROPÄISCHE PATENTSCHRIFT

(11) **EP 2 953 824 B1**
(45) Veröffentlichungstag und Bekanntmachung des Hinweises auf die Patenterteilung: **24.05.2017**
(21) Anmeldenummer: 14700513.6
(22) Anmeldetag: 15.01.2014
(51) Int. Cl.: B60S 1/38, C08L 23/16

(54) **EP(D)M-NOR/TOR/PIB/CR/IIR/CIIR/BIIR-WISCHGUMMI**
EP(D)M-NOR/TOR/PIB/CR/IIR/CIIR/BIIR-WIPER BLADE ELEMENT
LAME D'ESSUYAGE EP(D)M-NOR/TOR/PIB/CR/IIR/CIIR/BIIR

(30) Priorität: 08.02.2013 DE 102013202114
(43) Veröffentlichungstag der Anmeldung: 16.12.2015
(73) Patentinhaber: Robert Bosch GmbH, 70442 Stuttgart (DE)
(72) Erfinder: PIETERS, Eric, NL-6369 AK Simpelveld (NL); LAY, Reiner, 52072 Aachen (DE); CARLIER, Valerie, B-5340 Gesves (BE); GOTZEN, Nicolaas, B-3070 Kartenberg (BE); DUVAL, Vincent, B-1030 Bruxelles (BE)
(86) Internationale Anmeldenummer: PCT/EP2014/050730
(87) Internationale Veröffentlichungsnummer: WO 2014/121988

(56) Entgegenhaltungen:
- DE-A1- 3 527 093
- DE-A1- 19 944 274
- DE-A1-102007 047 079
- DE-A1-102010 003 139
- GB-A- 957 104
- US-A- 4 464 500

## Beschreibung

Die Erfindung betrifft ein Wischgummi, insbesondere für einen Scheibenwischer, ein Elastomermaterial für ein Wischgummi und einen Scheibenwischer.

### Stand der Technik

Wischgummis von Scheibenwischern dienen dazu bei Nässe eine gute Sicht durch eine Scheibe zu gewährleisten.

Neben der durch ein Wischgummi realisierbaren Wischqualität, sind bei Wischgummis für Scheibenwischer weitere Eigenschaften, wie Laufeigenschaften, Geräusche, etc., von Interesse. Beispielsweise können bei herkömmlichen Wischgummis beim Scheibenwischbetrieb unangenehme Laufgeräusche, wie Pfeifen, Quietschen, Schmatzen, Umleggeräusche, etc., auftreten.

Die Druckschriften DE 199 44 274 A1, WO 2009/130081 A1 und DE 10 2009 001 043 A1 beschreiben Wischgummis für Scheibenwischer.

### Offenbarung der Erfindung

Gegenstand der vorliegenden Erfindung ist ein Wischgummi, insbesondere für einen Scheibenwischer, beispielsweise eines Kraftfahrzeugs, umfassend ein Elastomermaterial, welches ein Polymerblend aus mindestens einem Ethylen-Propylen-Dien-Kautschuk (EPDM) und/oder mindestens einem Ethylen-Propylen-Kautschuk (EPM) und mindestens einem Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, umfasst.

Unter einem Polymerblend kann insbesondere eine makroskopisch homogene Mischung von zwei oder mehr verschiedenen Polymeren verstanden werden.

Ein Polymerblend, welches mindestens einen Ethylen-Propylen-Dien-Kautschuk (EPDM) und/oder mindestens einen Ethylen-Propylen-Kautschuk (EPM) und mindestens ein Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, umfasst, wird im Folgenden auch als EP(D)M-NOR/TOR/PIB/CR/IIR/CIIR/BIIR-Polymerblend bezeichnet.

Beispielsweise kann das Polymerblend zwei oder mehr (unterschiedliche) Ethylen-Propylen-Dien-Kautschuke und/oder zwei oder mehr (unterschiedliche) Ethylen-Propylen-Kautschuke, beispielsweise mit unterschiedlichen Ethylenanteilen und/oder Propylenanteilen und/oder Termonomeranteilen und/oder Termonomeren, beispielsweise ausgewählt aus der Gruppe, bestehend aus Ethylidennorbornen (ENB), Vinylnorbornen (VNB), Dicyclopentadien (DCP), 1,4-Hexadien, und Mischungen davon, umfassen.

Alternativ oder zusätzlich dazu kann das Polymerblend zwei oder mehr (unterschiedliche) Polymertypen, ausgewählt aus der Gruppe bestehend aus Polynorbornen, *trans*-Polyoctenamer, Polyisobutylen, Chloropren-Kautschuk, Butyl-Kautschuk, Chlorbutyl-Kautschuk und Brombutyl-Kautschuk, und/oder gegebenenfalls zwei oder mehr unterschiedliche Polymere des gleichen Polymertyps aus der Gruppe bestehend aus Polynorbornen, *trans-*Polyoctenamer, Polyisobutylen, Chloropren-Kautschuk, Butyl-Kautschuk, Chlorbutyl-Kautschuk und Brombutyl-Kautschuk, enthalten.

Neben Ethylen-Propylen-Dien-Kautschuk/en und/oder Ethylen-Propylen-Kautschuk/en und dem mindestens einen Polymer aus der vorstehend genannten Gruppe kann das Polymerblend grundsätzlich weiterhin noch eines oder mehrere andere Polymere, beispielsweise Ethylen-Vinylacetat-Copolymer/e, umfassen.

Es ist jedoch auch möglich, dass das Polymerblend aus Ethylen-Propylen-Dien-Kautschuk/en und/oder Ethylen-Propylen-Kautschuk/en und dem mindestens einen Polymer aus der vorstehend genannten Gruppe ausgebildet ist.

Unter ausgebildet kann in diesem Zusammenhang insbesondere verstanden werden, dass keine anderen Polymere enthalten sind, jedoch andere Stoffe, wie Additive und Zusatzstoffe, enthalten sein können.

Es hat sich gezeigt, dass beispielsweise beim Einsatz von reinem beziehungsweise ungeblendetem (nicht mit anderen Polymeren geblendetem) Ethylen-Propylen-Dien-Kautschuk (EPDM) in Elastomermaterialien zur Herstellung von Wischgummis, die daraus hergestellten Wischgummis zwar eine gute Wischqualität aufweisen können, jedoch bei deren Betrieb in der Regel auch starke Laufgeräusche, wie Pfeifen, Quietschen, Schmatzen, Umleggeräusche, etc., auftreten können.

Es hat sich herausgestellt, dass derartige Laufgeräusche vorteilhafterweise dadurch minimiert oder sogar vermieden werden können, dass ein Elastomermaterial auf der Basis eines Polymerblends aus Ethylen-Propylen-Dien-Kautschuk (EPDM) und/oder Ethylen-Propylen-Kautschuk (EPM) und einem oder mehreren Polymeren der Gruppe bestehend aus Polynorbornen, *trans*-Polyoctenamer, Polyisobutylen, Chloropren-Kautschuk, Butyl-Kautschuk, Chlorbutyl-Kautschuk und Brombutyl-Kautschuk eingesetzt wird. Dies beruht vermutlich darauf, dass durch Polynorbornen, *trans*-Polyoctenamer, Polyisobutylen, Chloropren-Kautschuk, Butyl-Kautschuk, Chlorbutyl-Kautschuk und/oder Brombutyl-Kautschuk eine Art Dämpfung in das Elastomermaterial eingebracht wird, welche eine Geräuschentwicklung mindert oder sogar verhindert.

Ein geräuschmindernder Effekt kann vorteilhafterweise bereits bei geringen Mengen des weiteren Polymers eintreten. Es hat sich jedoch herausgestellt, dass die Menge des weiteren Polymers nicht zu hoch sein sollte, da dann die vorteilhaften Eigenschaften des Ethylen-Propylen-Dien- und/oder Ethylen-Propylen-Kautschuks, insbesondere die gute Wischqualität, abnehmen und gegebenenfalls sogar unerwünschte Effekte durch das weitere Polymer hervorgerufen werden können.

Bei einem zu hohen Anteil von Polynorbornen, *trans*-Polyoctenamer beziehungsweise Chloropren-Kautschuk kann das Elastomermaterial zu hart und dessen E-Modul zu hoch werden. Dem kann in einem gewissen Maß durch eine Verringerung des Vernetzeranteils entgegen gewirkt werden. Ein weiterer Aspekt ist die Hitzebeständigkeit, welche vorteilhafterweise auch bei einem hohen Anteil von trans-Polyoctenamer beziehungsweise Chloropren-Kautschuk noch ausreichend gut sein kann, sich jedoch bei einem steigenden Polynorbornen-Anteil verschlechtern kann. Bei einem zu hohen Chloropren-Kautschuk-Anteil kann sich zudem ein unangenehmer Geruch einstellen.

Bei einem zu hohen Anteil von Polyisobutylen, Butyl-Kautschuk, Chlorbutyl-Kautschuk beziehungsweise Brombutyl-Kautschuk kann das Elastomermaterial hingegen zu weich werden und dessen E-Modul sinken. Dies kann insbesondere auf einer schlechten Vernetzungsfähigkeit beruhen. Die Hitzebeständigkeit kann dennoch ausreichend gut sein. Bei einem zu hohen Chlorbutyl- beziehungsweise Brombutyl-Kautschuk-Anteil kann sich zudem ein unangenehmer Geruch einstellen.

Durch eine Kombination von zwei oder mehr dieser Polymere, insbesondere mit gegenläufigen, Effekten können diese Effekte vorteilhafterweise in einem gewissen Maß ausgeglichen werden.

Um ein Wischgummi bereitzustellen, welches eine akzeptable bis gute Wischqualität und Laufeigenschaften aufweist und zudem kaum beziehungsweise keine Laufgeräusche, wie Pfeifen, Quietschen, Schmatzen, Umleggeräusche, etc., erzeugt, hat es sich als vorteilhaft herausgestellt, wenn das Gewichtsverhältnis von Ethylen-Propylen-Dien-Kautschuk und/oder Ethylen-Propylen-Kautschuk (in Summe) zu dem mindestens einen Polymer, insbesondere dem Gesamtgewicht des mindestens einen Polymers, in einem Bereich von 40:60 bis 95:5 liegt und/oder der Anteil an dem mindestens einen Polymer, das heißt im Fall von mehreren Polymeren der Gesamtanteil der mit Ethylen-Propylen-Dien-Kautschuk und/oder Ethylen-Propylen-Kautschuk geblendeten Polymere (NOR/TOR/PIB/CR/IIR/CIIR/BIIR), mindestens ≥ 5 Gew.-% und höchstens ≤ 60 Gew.-%, bezogen auf das Gesamtgewicht der Polymere in dem Polymerblend, ist. So kann vorteilhafterweise ein Wischgummi bereitgestellt werden, welches eine gute Wischqualität und gute Laufeigenschaften aufweisen und zudem kaum beziehungsweise keine Laufgeräusche, wie Pfeifen, Quietschen, Schmatzen, Umleggeräusche, etc., erzeugen kann.

Im Rahmen einer Ausführungsform liegt in dem Polymerblend daher das Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu dem mindestens einen Polymer, insbesondere dem Gesamtgewicht des mindestens einen Polymers, in einem Bereich von 40:60 bis 95:5. Insbesondere kann dabei in dem Polymerblend das Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu dem mindestens einen Polymer, insbesondere dem Gesamtgewicht des mindestens einen Polymers, in einem Bereich von 45:55 oder 50:50 oder 55:45 oder 60:40 oder 70:30 bis 95:5 oder 90:10 oder 85:15 oder 80:20 liegen.

Im Rahmen einer speziellen Ausgestaltung dieser Ausführungsform liegt in dem Polymerblend das Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu dem mindestens einen Polymer, insbesondere dem Gesamtgewicht des mindestens einen Polymers, in einem Bereich von 50:50 bis 95:5 oder 90:10. Dies hat sich als besonders vorteilhaft erwiesen.

Im Rahmen einer weiteren Ausführungsform enthält das Polymerblend, bezogen auf das Gesamtgewicht der Polymere in dem Polymerblend, ≥ 5 Gew.-% bis ≤ 60 Gew.-% an dem mindestens einen Polymer (in Summe).

Dabei kann Polymerblend, bezogen auf das Gesamtgewicht der Polymere in dem Polymerblend insbesondere ≥ 40 Gew.-% bis ≤ 95 Gew.-% Ethylen-Propylen-Dien-Kautschuk und/oder Ethylen-Propylen-Kautschuk (in Summe), insbesondere Ethylen-Propylen-Dien-Kautschuk (in Summe), enthalten.

Beispielsweise kann das Polymerblend, bezogen auf das Gesamtgewicht der Polymere in dem Polymerblend, ≥ 5 Gew.-% oder ≥ 10 Gew.-% oder ≥ 15 Gew.-% oder ≥ 20 Gew.-% bits ≤ 55 Gew.-% oder ≤ 50 Gew.-% oder ≤ 45 Gew.-% oder ≤ 40 Gew.-%, an dem mindestens einen Polymer (in Summe) enthalten. Dabei kann das Polymerblend, bezogen auf das Gesamtgewicht der Polymere in dem Polymerblend, ≥ 45 Gew.-% oder ≥ 50 Gew.-% oder ≥ 55 Gew.-% oder ≥ 60 Gew.-% oder ≥ 70 Gew.-% bis ≥ 95 Gew.-% oder ≥ 90 Gew.-% oder ≥ 85 Gew.-% ≥ 80 Gew.-% Ethylen-Propylen-Dien-Kautschuk und/oder Ethylen-Propylen-Kautschuk (in Summe), insbesondere Ethylen-Propylen-Dien-Kautschuk (in Summe), enthalten.

Im Rahmen einer speziellen Ausgestaltung dieser Ausführungsform enthält das Polymerblend, bezogen auf das Gesamtgewicht der Polymere in dem Polymerblend, ≥ 5 Gew.-% oder ≥ 10 Gew.-% bis ≤ 50 Gew.-% an dem mindestens einen Polymer (in Summe). Dabei kann das Polymerblend, bezogen auf das Gesamtgewicht der Polymere in dem Polymerblend insbesondere ≥ 50 Gew.-% bits ≤ 95 Gew.-% oder ≤ 90 Gew.-% Ethylen-Propylen-Dien-Kautschuk und/oder Ethylen-Propylen-Kautschuk (in Summe), insbesondere Ethylen-Propylen-Dien-Kautschuk (in Summe), enthalten. Zum Beispiel kann das Polymerblend, bezogen auf das Gesamtgewicht der Polymere in dem Polymerblend, ≥ 5 Gew.-% oder ≥ 10 Gew.-% bis ≤ 50 Gew.-% an dem mindestens einen Polymer und ≥ 50 Gew.-% bis ≤ 95 Gew.-% oder ≤ 90 Gew.-% Ethylen-Propylen-Dien-Kautschuk und/oder Ethylen-Propylen-Kautschuk (in Summe), insbesondere Ethylen-Propylen-Dien-Kautschuk (in Summe), enthalten. Dies hat sich als besonders vorteilhaft erwiesen.

Das Polymerblend kann grundsätzlich ein Polymerblend sein, welches mindestens einen Ethylen-Propylen-Dien-Kautschuk und/oder mindestens einen Ethylen-Propylen-Kautschuk und mindestens ein Polymer, ausgewählt aus der Gruppe bestehend aus Polynorbornen, *trans*-Polyoctenamer, Polyisobutylen, Chloropren-Kautschuk, Butyl-Kautschuk, Chlorbutyl-Kautschuk, Brombutyl-Kautschuk und Mischungen davon, umfasst oder daraus ausgebildet ist (EP(D)M-NOR/TOR/PIB/CR/IIR/CIIR/BIIR-Polymerblend) oder welches mindestens einen Ethylen-Propylen-Dien-Kautschuk und mindestens ein Polymer aus dieser Gruppe umfasst oder daraus ausgebildet ist (EPDM-NOR/TOR/PIB/CR/IIR/CIIR/BIIR-Polymerblend), oder welches mindestens einen Ethylen-Propylen-Kautschuk und mindestens ein Polymer aus dieser Gruppe umfasst oder daraus ausgebildet ist (EPM-NOR/TOR/PIB/CR/IIR/CIIR/BIIR-Polymerblend).

Im Rahmen einer weiteren Ausführungsform ist das Polymerblend ein Polymerblend (EPDM-NOR/TOR/PIB/CR/IIR/CIIR/BIIR-Polymerblend) aus mindestens einem Ethylen-Propylen-Dien-Kautschuk (EPDM) und mindestens einem Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon. Insbesondere kann das Polymerblend ein Polymerblend (EPDM-NOR/TOR/PIB/CR/IIR/CIIR/BIIR-Polymerblend) sein, welches aus mindestens einem Ethylen-Propylen-Dien-Kautschuk (EPDM) und mindestens einem Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, ausgebildet ist. Durch Ethylen-Propylen-Dien-Kautschuk (EPDM) kann vorteilhafterweise ein höherer Vernetzungsgrad erzielt werden. Zudem kann Ethylen-Propylen-Dien-Kautschuk (EPDM) vorteilhafterweise sowohl durch Peroxide als auch durch Schwefel vernetzt werden und eine gute Verarbeitbarkeit aufweisen.

Im Rahmen einer weiteren Ausführungsform ist das mindestens eine Polymer, ausgewählt ist aus der Gruppe bestehend aus Polynorbornen (NOR), *trans-*Polyoctenamer (TOR), Polyisobutylen (PIB) und Mischungen davon.

Beispielsweise kann das mindestens eine Polymer Polynorbornen (NOR) und/oder *trans*-Polyoctenamer (TOR) und/oder Polyisobutylen (PIB) sein. Dies hat sich als besonders vorteilhaft erwiesen.

Polynorbornen kann sowohl pur als auch in Form eines öligen Gemischs, beispielsweise eines so genannten Polynorbornen/Öl-Masterbatches, mit dem Ethylen-Propylen-Dien-Kautschuk und/oder Ethylen-Propylen-Kautschuk zu dem Polymerblend gemischt werden.

Im Rahmen einer speziellen Ausgestaltung ist das Polynorbornen jedoch ein Polynorbornen/Öl-Gemisch. Dies hat sich insbesondere als vorteilhaft auf die Verarbeitbarkeit des Polymerblends beziehungsweise Elastomermaterials erwiesen. Das Öl des Polynorbornen/Öl-Gemischs kann dabei insbesondere ein Weichmacheröl oder Weichmacherölgemisch sein. Durch die Zugabe eines Weichmacheröls können die Laufeigenschaften und gegebenenfalls Laufgeräusche des Wischgummis vorteilhafterweise noch verbessert werden.

Insbesondere kann das (Weichmacher-)Öl des Polynorbornen/Öl-Gemischs ein paraffinisches, naphthenisches oder aromatisches Öl, beispielsweise ein Mineralöl, ein synthetisches Öl, ein natürliches Öl oder ein Ölgemisch davon sein. Beispielsweise kann das (Weichmacher-)Öl des Polynorbornen/Öl-Gemischs ein Mineralöl sein. Insbesondere kann das (Weichmacher-)Öl des Polynorbornen/Öl-Gemischs ein paraffinisches Öl, beispielsweise ein hoch-raffiniertes, paraffinisches Mineralöl, sein. Zum Beispiel kann das (Weichmacher-)Öl des Polynorbornen/Öl-Gemischs ein hoch-raffiniertes, durch katalytische Hydrogenierung gesäubertes, paraffinisches Mineralöl sein. Insbesondere kann das (Weichmacher-)Öl des Polynorbornen/Öl-Gemischs ein Öl entsprechend der EU-Richtlinie 2005/69/EC sein.

Im Rahmen einer speziellen Ausgestaltung weist das (Weichmacher-)Öl des Polynorbornen/Öl-Gemischs einen Pourpoint in einem Bereich von ≥ -25 °C bis ≤ +25 °C, insbesondere von ≥ -15 °C oder ≥ -10 °C oder ≥ -5 °C oder ≥ 0 °C bis ≤ +25 °C oder ≤ +20 °C oder ≤ +15 °C oder ≤ +10 °C oder ≤ +5 °C, auf.

Der Pourpoint (Englisch: pour = gießen im Sinne von eingießen) bezeichnet nach DIN 51597 für ein flüssiges Produkt die Temperatur, bei der es bei Abkühlung gerade noch fließt.

Gegebenenfalls kann das das (Weichmacher-)Öl des Polynorbornen/Öl-Gemischs mit einem oben genannten Pourpoint dabei auch einen Stockpunkt in einem Bereich von ≥ -25 °C bis ≤ +25 °C, insbesondere von ≥ -15 °C oder ≥-10 °C oder ≥ -5 °C oder ≥ 0 °C bis ≤ +25 °C oder ≤ +20 °C oder ≤ +15 °C oder ≤ +10 °C oder ≤ +5 °C, aufweisen. Es ist jedoch ebenso möglich, dass das Öl des Polynorbornen/Öl-Gemischs mit einem oben genannten Pourpoint einen Stockpunkt aufweist, welcher etwas höher als die oben genannten Bereiche liegt, da der Stockpunkt meist einige Grad höher als der Pourpoint liegt.

Der Stockpunkt (Englisch: Setting Point) bezeichnet nach DIN EN 23015 (ehemals DIN 51583) die Temperatur, bei der eine Probe aufgehört hat zu fließen und für 10 Sekunden keine Bewegung der Probe mehr zu erkennen ist.

Es hat sich herausgestellt, dass sich Weichmacheröle mit einem oben genannten Pourpoint, und gegebenenfalls auch Stockpunkt, besonders vorteilhaft auf die Laufgeräuschminimierung auswirken. Vermutlich liegt auch dies darin begründet, dass durch das Weichmacheröl mit einem derartigen Pourpoint eine Art Dämpfung in das Elastomermaterial eingebracht wird. Es hat sich herausgestellt, dass dabei der geräuschmindernde Effekt von dem Pourpoint abhängig ist. Zum Erzielen des geräuschmindernden Effektes hat es sich dabei als vorteilhaft erwiesen, wenn ein Weichmacheröl mit einem Pourpoint, und gegebenenfalls auch Stockpunkt, von zumindest ≥ -25 °C, beispielsweise ≥ -15 °C oder ≥ -10 °C oder ≥ -5 °C, eingesetzt wird. Andererseits hat sich herausgestellt, dass von dem Pourpoint des Weichmacheröls auch die Kälteflexibilität und damit andere Laufeigenschaften des Wischgummis abhängig sind. Im Hinblick hierauf hat es sich dabei als vorteilhaft erwiesen, wenn das Weichmacheröl einen Pourpoint, und gegebenenfalls auch Stockpunkt, vorn ≤ +25 °C, beispielsweise ≤ +20 °C oder ≤ +15 °C oder ≤ +10 °C oder ≤ +5 °C, aufweist.

In dem Polynorbornen/Öl-Gemisch kann das Gewichtsverhältnis von Polynorbornen zu dem Öl insbesondere in einem Bereich von 30:70 bis 70:30 liegen.

Im Rahmen einer weiteren Ausführungsform umfasst das Elastomermaterial weiterhin, das heißt im Fall eines Polynorbornen/Öl-Gemisch zusätzlich, mindestens ein Weichmacheröl.

Insbesondere kann dabei das Elastomermaterial weiterhin mindestens ein Weichmacheröl mit einem Pourpoint in einem Bereich von ≥ -25 °C bis ≤ +25 °C, insbesondere von ≥ -15 °C oder ≥ -10 °C oder ≥ -5 °C oder ≥ 0 °C bis ≤ +25 °C oder ≤ +20 °C oder ≤ +15 °C oder ≤ +10 °C oder ≤ +5 °C, aufweisen. Wie bereits im Zusammenhang mit dem (Weichmacher-)Öl des Polynorbornen/Öl-Gemischs erläutert - können durch die Zugabe eines Weichmacheröls vorteilhafterweise die Verarbeitbarkeit und die Laufeigenschaften verbessert sowie gegebenenfalls die Laufgeräusche minimiert werden.

Gegebenenfalls kann das mindestens eine Weichmacheröl mit einem oben genannten Pourpoint dabei auch einen Stockpunkt in einem Bereich von ≥ -25 °C bis ≤ +25 °C, insbesondere von ≥ -15 °C oder ≥ -10 °C oder ≥ -5 °C oder ≥ 0 °C bis ≤ +25 °C oder ≤ +20 °C oder ≤ +15 °C oder ≤ +10 °C oder ≤ +5 °C, aufweisen. Es ist jedoch ebenso möglich, dass das mindestens eine Weichmacheröl mit einem oben genannten Pourpoint einen Stockpunkt aufweist, welcher etwas höher als die oben genannten Bereiche liegt, da der Stockpunkt meist einige Grad höher als der Pourpoint liegt. Wie bereits im Zusammenhang mit dem Polynorbornen/Öl-Gemisch erläutert können durch die Zugabe eines derartigen Weichmacheröls die Laufeigenschaften und Laufgeräusche des Wischgummis vorteilhafterweise noch verbessert werden.

Das mindestens eine Weichmacheröl kann insbesondere ebenfalls ein paraffinisches, naphthenisches oder aromatisches Öl, beispielsweise ein Mineralöl, ein synthetisches Öl, ein natürliches Öl oder ein Ölgemisch davon sein. Beispielsweise kann das mindestens eine Weichmacheröl ein Mineralöl sein. Insbesondere kann das mindestens eine Weichmacheröl ein paraffinisches Öl, beispielsweise ein hoch-raffiniertes, paraffinisches Mineralöl, sein. Zum Beispiel kann das mindestens eine Weichmacheröl ein hoch-raffiniertes, durch katalytische Hydrogenierung gesäubertes, paraffinisches Mineralöl sein. Insbesondere kann das mindestens eine Weichmacheröl ein Öl entsprechend der EU-Richtlinie 2005/69/EC sein. Das mindestens eine Weichmacheröl kann insbesondere dasselbe Öl wie das Öl des Polynorbornen/Öl-Gemisch sein.

Im Rahmen einer weiteren Ausführungsform enthält das Elastomermaterial pro 100 Gewichtsteile des Polymerblends ≥ 5 Gewichtsteile bis ≤ 80 Gewichtsteile Weichmacheröl. Insbesondere kann das Elastomermaterial pro 100 Gewichtsteile des Polymerblends ≥ 5 Gewichtsteile bis ≤ 80 Gewichtsteile Weichmacheröl mit einem oben genannten Pourpoint (und gegebenenfalls auch Stockpunkt). Dies hat sich im Hinblick auf die Verarbeitbarkeit und die Laufeigenschaften, insbesondere die Laufgeräuschminimierung, als vorteilhaft erwiesen.

Beispielsweise kann das Elastomermaterial pro 100 Gewichtsteile des Polymerblends ≥ 5 Gewichtsteile bis ≤ 50 Gewichtsteile, insbesondere ≥ 10 Gewichtsteile bis ≤ 45 Gewichtsteile, Weichmacheröl enthalten.

Im Rahmen einer weiteren Ausführungsform enthält das Elastomermaterial pro 100 Gewichtsteile des Polymerblends ≥ 5 Gewichtsteile bis ≤ 50 Gewichtsteile, insbesondere ≥ 10 Gewichtsteile bits ≤ 45 Gewichtsteile, Weichmacheröl mit einem oben genannten Pourpoint (und gegebenenfalls auch Stockpunkt). Dies hat sich insbesondere zur Laufgeräuschminimierung als besonders vorteilhaft erwiesen.

Insofern das mindestens eine Weichmacheröl, insbesondere mit einem Pourpoint in einem Bereich von ≥ -25 °C bis ≤ +25 °C, zusätzlich zu dem Öl eines Polynorbornen/Öl-Gemischs eingesetzt wird, enthält das Elastomermaterial pro 100 Gewichtsteile des Polymerblends vorzugsweise insgesamt ≥ 5 Gewichtsteile bis ≤ 80 Gewichtsteile an Weichmacherölen, beispielsweise an dem mindestens einen Weichmacheröl, insbesondere mit einem oben genannten Pourpoint (und gegebenenfalls auch Stockpunkt), und gegebenenfalls an Öl des Polynorbornen/Öl-Gemischs in Summe.

Neben dem mindestens einen Weichmacheröl mit einem oben genannten Pourpoint (und gegebenenfalls Stockpunkt) kann das Elastomermaterial noch eines oder mehrere andere Weichmacheröle enthalten. Vorzugsweise ist dabei der Anteil an anderen Weichmacherölen jedoch geringer oder maximal gleich hoch wie der Anteil an Weichmacherölen mit einem oben genannten Pourpoint. Insofern andere Weichmacheröle vorgesehen werden, kann es vorteilhaft sein wenn das Elastomermaterial pro 100 Gewichtsteile des Polymerblends insgesamt ≥ 5 Gewichtsteile bis ≤ 80 Gewichtsteile an Weichmacherölen, beispielsweise an dem mindestens einen Weichmacheröl, insbesondere mit einem oben genannten Pourpoint (und gegebenenfalls auch Stockpunkt), und sonstigen Weichmacherölen und gegebenenfalls an Öl des Polynorbornen/Öl-Gemischs in Summe, enthält.

Im Rahmen einer weiteren Ausführungsform enthält das Elastomermaterial weiterhin Ruß. Beispielsweise kann das Elastomermaterial pro 100 Gewichtsteile des Polymerblends ≥ 20 Gewichtssteilen bis ≤ 120 Gewichtsteile Ruß enthalten. Es hat sich herausgestellt, dass ein Ruß-Anteil von ≥ 20 Gewichtssteilen pro 100 Gewichtsteile Polymerblend zum Erzielen einer guten Abriebbeständigkeit vorteilhaft ist. Um zugleich eine gute Verarbeitbarkeit zu gewährleisten, hat es sich jedoch als vorteilhaft herausgestellt den Ruß-Anteil nicht zu hoch einzustellen. In einem gewissen Maß kann die Verarbeitbarkeit bei hohen Rußmengen durch Zugabe eines Öls, insbesondere eines vorstehend näher erläuterten Weichmacheröls, verbessert werden. Im Hinblick auf den geräuschmindernden Effekt und die dynamischen Eigenschaften beziehungsweise Laufeigenschaften des Wischgummis, hat es sich als vorteilhaft erwiesen pro 100 Gewichtsteile Polymerblend maximal ≤ 120 Gewichtsteile Ruß und wie vorstehend näher erläutert maximal ≤ 80 Gewichtsteile (Weichmacher-)Öl zu verwenden.

Beispielsweise kann das Elastomermaterial pro 100 Gewichtsteile des Polymerblends ≥ 25 Gewichtsteile bis ≤ 95 Gewichtsteile Ruß enthalten. Insbesondere kann das Elastomermaterial pro 100 Gewichtsteile des Polymerblends ≥ 30 Gewichtsteile oder ≥ 35 Gewichtsteile bis ≤ 90 Gewichtsteile oder ≤ 85 Gewichtsteile oder ≤ 80 Gewichtsteile oder ≤ 75 Gewichtsteile Ruß enthalten. Derartige Ruß-Anteile haben sich im Hinblick auf die Abriebbeständigkeit und Verarbeitbarkeit als besonders vorteilhaft erwiesen. Zudem haben sich derartige Ruß-Anteile auch im Hinblick auf eine Geräuschminimierung als besonders vorteilhaft erwiesen.

Im Rahmen einer weiteren Ausführungsform liegt das Gewichtsverhältnis von Ruß zu (Weichmacher-)Öl in einem Bereich von 90:10 bis 50:50, insbesondere in einem Bereich von 80:20 bis 65:35. Dies hat sich im Hinblick auf die Verarbeitbarkeit und die Laufeigenschaften, insbesondere die Laufgeräuschminimierung, als vorteilhaft erwiesen. Insbesondere kann das Gewichtsverhältnis von Ruß zu Weichmacheröl mit einem oben genannten Pourpoint (und gegebenenfalls auch Stockpunkt) in einem Bereich 90:10 bis 50:50, insbesondere in einem Bereich von 80:20 bis 65:35, liegen. Dies hat sich zum Erzielen guter Laufeigenschaften und weniger bis keiner Laufgeräusche als besonders vorteilhaft herausgestellt.

Im Rahmen einer Ausgestaltung ist das Polymerblend (EP(D)M-NOR/TOR/PIB/CR/IIR/CIIR/BIIR-Polymerblend) ein Ethylen-Propylen-Dien-Kautschuk-(EPDM)-Polynorbornen-(NOR)-Polymerblend. Dabei kann in dem Polymerblend das Gewichtsverhältnis von Ethylen-Propylen-Dien-Kautschuk zu Polynorbornen beispielsweise in einem Bereich von 50:50 oder 55:45 oder 60:40 bis 95:5 oder 90:10 liegen.

Im Rahmen einer anderen Ausgestaltung ist das Polymerblend ein Ethylen-Propylen-Dien-Kautschuk-(EPDM)-*trans*-Polyoctenamer-(TOR)-Polymerblend. Dabei kann in dem Polymerblend das Gewichtsverhältnis von Ethylen-Propylen-Dien-Kautschuk zu *trans*-Polyoctenamer beispielsweise in einem Bereich von 50:50 oder 55:45 oder 60:40 bis 95:5 oder 90:10 liegen.

Im Rahmen einer anderen Ausgestaltung ist das Polymerblend ein Ethylen-Propylen-Dien-Kautschuk-(EPDM)-Polyisobutylen-(PIB)-Polymerblend. Dabei kann in dem Polymerblend das Gewichtsverhältnis von Ethylen-Propylen-Dien-Kautschuk zu Polyisobutylen beispielsweise in einem Bereich von 50:50 oder 55:45 oder 60:40 bis 95:5 oder 90:10 liegen. Das Polyisobutylen kann dabei insbesondere ein Molekulargewicht zwischen 20.000 g/mol und 5.000.000 g/mol aufweisen. Insbesondere kann Polyisobutylen mit einem Molekulargewicht von ≥ 100.000 g/mol eingesetzt werden. Durch ein höheres Molekulargewicht, beispielsweise von ≥ 100.000 g/mol, kann vorteilhafterweise die Verarbeitbarkeit verbessert werden.

Im Rahmen einer weiteren Ausführungsform weist das Polyisobutylen daher ein Molekulargewicht von ≥ 100.000 g/mol auf.

Insbesondere kann oxidationsstabilisiertes Polyisobutylen eingesetzt werden. Zur Stabilisierung kann zum Beispiel pro kg Polyisobutylen ≥ 100 mg/kg bis ≤ 1100 mg/kg, beispielsweise ≥ 200 mg/kg bis ≤ 800 mg/kg, insbesondere ≥ 300 mg/kg bis ≤ 700 mg/kg, Stabilisator/Antioxidationsmittel zugesetzt werden. Als Stabilisator/Antioxidationsmittel können zum Beispiel nicht verfärbende Stabilisatoren/Antioxidationsmittel, zum Beispiel 2,6-di-tert-Butyl-4-methylphenol (BHT), verwendet werden.

Im Rahmen einer anderen Ausgestaltung ist das Polymerblend ein Ethylen-Propylen-Dien-Kautschuk-(EPDM)-Chloropren-Kautschuk-(CR)-Polymerblend. Dabei kann in dem Polymerblend das Gewichtsverhältnis von Ethylen-Propylen-Dien-Kautschuk zu Chloropren-Kautschuk beispielsweise in einem Bereich von 50:50 oder 55:45 oder 60:40 bis 95:5 oder 90:10 liegen.

Im Rahmen einer anderen Ausgestaltung ist das Polymerblend ein Polymerblend aus Ethylen-Propylen-Dien-Kautschuk-(EPDM) und Butylkautschuk (IIR) und/oder Chlorbutyl-Kautschuk (CIIR) und/oder Brombutyl-Kautschuk (BIIR). Dabei kann in dem Polymerblend das Gewichtsverhältnis von Ethylen-Propylen-Dien-Kautschuk zu Butylkautschuk und/oder Chlorbutyl-Kautschuk und/oder Brombutyl-Kautschuk (in Summe) beispielsweise in einem Bereich von 50:50 oder 55:45 oder 60:40 bis 95:5 oder 90:10 liegen.

Weiterhin kann das Elastomermaterial mindestens ein Gleitmittel, insbesondere ausgewählt aus der Gruppe bestehend aus Graphit, Polytetrafluorethylen, Molybdänsulfid und Mischungen davon, enthalten. Beispielsweise kann das Elastomermaterial pro 100 Gewichtsteile des Polymerblends ≥ 1 Gewichtsteile bis ≤ 20 Gewichtsteile, beispielsweise ≥ 2 Gewichtsteile bis ≤ 15 Gewichtsteile, insbesondere ≥ 3 Gewichtsteile bis ≤ 10 Gewichtsteile, an Gleitmitteln enthalten.

Weiterhin kann das Elastomermaterial mindestens ein Vernetzungsmittel umfassen. Das Vernetzungsmittel kann ein Vernetzungsmittel auf Schwefel- und/oder Peroxid-Basis sein. Vorzugsweise ist das Vernetzungsmittel ein Vernetzungsmittel auf Peroxid-Basis. Weiterhin kann Elastomermaterial einen oder mehrere Vernetzungsbeschleuniger und/oder Schwefel und/oder Schwefeldonor/en und/oder Peroxid/e sowie gegebenenfalls Vernetzungscoagenzien enthalten.

Darüber hinaus kann das Elastomermaterial noch weitere Zusatzstoffe, wie sonstige Weichmacher, weiße Füllstoffe, Pigmente, Färbemittel, Antidegradanten, Aktivatoren, wie zum Beispiel Zinkoxid, Magnesiumoxid und/oder Stearinsäure, Prozesshilfsstoffe, und/oder Feuchteabsorber, wie zum Beispiel Calciumoxid, enthalten.

Im Rahmen einer weiteren Ausführungsform weist das Wischgummi eine Wischlippe, einen Kippsteg und einen Befestigungsabschnitt auf. Die Wischlippe ist dabei insbesondere mit dem Kippsteg und der Kippsteg mit dem Befestigungsbachschnitt verbunden. Die Wischlippe kann dabei insbesondere einen Wischlippenkopf und eine Wischlippenspitze aufweisen. Dabei kann insbesondere der Wischlippenkopf mit dem Kippsteg verbunden sein.

Das Wischgummi kann teilweise oder vollständig aus dem Elastomermaterial (EP(D)M-NOR/TOR/PIB/CR/IIR/CIIR/BIIR-Polymerblend-Elastomermaterial) ausgebildet sein.

Insbesondere kann die Wischlippe zumindest teilweise aus dem Elastomermaterial (EP(D)M-NOR/TOR/PIB/CR/IIR/CIIR/BIIR-Polymerblend-Elastomermaterial) ausgebildet sein. Alternativ oder zusätzlich dazu kann der Kippsteg und/oder der Befestigungsabschnitt aus dem Elastomermaterial (EP(D)M-NOR/TOR/PIB/CR/IIR/CIIR/BIIR-Polymerblend-Elastomermaterial) ausgebildet sein.

Im Rahmen einer Ausführungsform ist das komplette Wischgummi aus dem Elastomermaterial (EP(D)M-NOR/TOR/PIB/CR/IIR/CIIR/BIIR-Polymerblend-Elastomermaterial) ausgebildet.

Im Rahmen einer anderen Ausführungsform umfasst das Wischgummi, beispielsweise die Wischlippe, mindestens ein weiteres, unterschiedliches Elastomermaterial.

Das weitere, unterschiedliche Elastomermaterial kann dabei beispielsweise mindestens einen Ethylen-Propylen-Dien-Kautschuk und/oder mindestens einen Ethylen-Propylen-Kautschuk, zum Beispiel reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, umfassen oder daraus ausgebildet sein oder ein unterschiedliches Polymerblend aus mindestens einem Ethylen-Propylen-Dien-Kautschuk und/oder mindestens einem Ethylen-Propylen-Kautschuk und mindestens einem Polymer, beispielsweise ausgewählt aus der Gruppe bestehend aus Ethylen-Vinylacetat-Copolymer, Polynorbornen, *trans*-Polyoctenamer, Polyisobutylen, Chloropren-Kautschuk, Butyl-Kautschuk, Chlorbutyl-Kautschuk, Brombutyl-Kautschuk und Mischungen davon, umfassen oder daraus ausgebildet sein.

Das weitere, unterschiedliche Elastomermaterial kann weiterhin Ruß, Weichmacheröle, Gleitmittel, Vernetzungsmittel, Vernetzungsbeschleuniger und/oder Schwefel und/oder Schwefeldonor/en und/oder Peroxid/e, Vernetzungscoagenzien und weitere Zusatzstoffe, wie sonstige Weichmacher, weiße Füllstoffe, Pigmente, Färbemittel, Antidegradanten, Aktivatoren, wie zum Beispiel Zinkoxid, Magnesiumoxid und/oder Stearinsäure, Prozesshilfsstoffe, und/oder Feuchteabsorber, wie zum Beispiel Calciumoxid, enthalten. Hinsichtlich spezieller Ausführungsformen des weiteren Elastomermaterials wird hiermit explizit auf die im Zusammenhang mit dem EP(D)M-NOR/TOR/PIB/CR/IIR/CIIR/BIIR-Polymerblend - beziehungsweise - Elastomermaterial erläutere Ausführungsformen verwiesen.

Das weitere, unterschiedliche Elastomermaterial kann sich beispielsweise durch die darin enthaltenen Polymertypen und/oder -anteile und/oder die Additive und/oder Zusatzstoffe und/oder deren Mengenverhältnisse unterscheiden.

Insofern das weitere, unterschiedliche Elastomermaterial ein unterschiedliches Polymerblend umfasst, so kann dieses sich beispielsweise durch unterschiedliche Ethylen-Propylen-Dien-Kautschuke und/oder Ethylen-Propylen-Kautschuke, beispielsweise mit unterschiedlichen Ethylenanteilen und/oder Propylenanteilen und/oder Termonomeranteilen und/oder Termonomeren, beispielsweise ausgewählt aus der Gruppe, bestehend aus Ethylidennorbornen (ENB), Vinylnorbornen (VNB), Dicyclopentadien (DCP), 1,4-Hexadien, und Mischungen davon, und/oder durch unterschiedliche Polymertypen, ausgewählt aus der Gruppe bestehend aus Ethylen-Vinylacetat-Copolymer, Polynorbornen, *trans*-Polyoctenamer, Polyisobutylen, Chloropren-Kautschuk, Butyl-Kautschuk, Chlorbutyl-Kautschuk und Brombutyl-Kautschuk, und/oder gegebenenfalls durch zwei oder mehr unterschiedliche Polymere des gleichen Polymertyps aus der Gruppe bestehend aus Ethylen-Vinylacetat-Copolymer, Polynorbornen, *trans-*Polyoctenamer, Polyisobutylen, Chloropren-Kautschuk, Butyl-Kautschuk, Chlorbutyl-Kautschuk und Brombutyl-Kautschuk, unterscheiden.

Im Rahmen einer speziellen Ausgestaltung umfasst das weitere, unterschiedliche Elastomermaterial mindestens einen Ethylen-Propylen-Dien-Kautschuk und/oder mindestens einen Ethylen-Propylen-Kautschuk, zum Beispiel reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, oder ist daraus ausgebildet.

Im Rahmen einer anderen speziellen Ausgestaltung umfasst das weitere, unterschiedliche Elastomermaterial ein unterschiedliches Polymerblend aus mindestens einen Ethylen-Propylen-Dien-Kautschuk (EPDM) und/oder mindestens einen Ethylen-Propylen-Kautschuk (EPM) und mindestens einem Polymer ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, oder ist daraus ausgebildet.

Im Rahmen einer anderen speziellen Ausgestaltung umfasst das weitere, unterschiedliche Elastomermaterial ein Polymerblend aus mindestens einem Ethylen-Propylen-Dien-Kautschuk (EPDM) und/oder mindestens einem Ethylen-Propylen-Kautschuk (EPM) und mindestens einem Ethylen-Vinylacetat-Copolymer (EVM) oder ist daraus ausgebildet.

Ein Polymerblend, welches mindestens einem Ethylen-Propylen-Dien-Kautschuk (EPDM) und/oder mindestens einen Ethylen-Propylen-Kautschuk (EPM) und mindestens ein Ethylen-Vinylacetat-Copolymer (EVM) umfasst, wird im Folgenden auch als Ethylen-Propylen-(Dien)-Kautschuk-Ethylen-Vinylacetat-Copolymer-Polymerblend beziehungsweise EP(D)M-EVM-Polymerblend beziehungsweise EVM-Polymerblend bezeichnet.

Vorteilhafterweise können Laufgeräusche, wie Pfeifen, Quietschen, Schmatzen, Umleggeräusche, etc., zusätzlich dadurch minimiert oder sogar vermieden werden, dass zusätzlich ein Elastomermaterial auf der Basis eines EP(D)M-EVM-Polymerblends eingesetzt wird und/oder das Polymerblend als EP(D)M-NOR/TOR/PIB/CR/IIR/CIIR/BIIR-EVM-Polymerblend ausgestaltet wird.

Das EVM-Polymerblend kann insbesondere mindestens ein Ethylen-Vinylacetat-Copolymer mit einem Vinylacetat-Anteil in einem Bereich von ≥ 45 Gew.-% bis ≤ 85 Gew.-%, bezogen auf das Gesamtgewicht des Ethylen-Vinylacetat-Copolymers, enthalten. Vorteilhafterweise können Laufgeräusche, wie Pfeifen, Quietschen, Schmatzen, Umleggeräusche, etc., zusätzlich dadurch minimiert oder sogar vermieden werden, dass zusätzlich ein Elastomermaterial auf der Basis eines EVM-Polymerblend mit einem oben genannten Vinylacetat-Anteil eingesetzt wird.

Der geräuschmindernde Effekt beruht vermutlich darauf, dass durch das Ethylen-Vinylacetat-Copolymer eine Art Dämpfung in das Elastomermaterial eingebracht wird. Es hat sich herausgestellt, dass dabei der geräuschmindernde Effekt von dem Vinylacetat-Anteil des Ethylen-Vinylacetat-Copolymers abhängig ist. Zum Erzielen des geräuschmindernden Effektes hat es sich dabei als vorteilhaft erwiesen, wenn das Ethylen-Vinylacetat-Copolymer einen Vinylacetat-Anteil von zumindest ≥ 45 Gew.-%, bezogen auf das Gesamtgewicht des Ethylen-Vinylacetat-Copolymers, aufweist. Andererseits hat sich herausgestellt, dass von dem Vinylacetat-Anteil des Ethylen-Vinylacetat-Copolymers auch die Kälteflexibilität und damit die Laufeigenschaften des Wischgummis abhängig sind. Im Hinblick auf die Kälteflexibilität und Laufeigenschaften hat es sich dabei als vorteilhaft erwiesen, wenn der Vinylacetat-Anteil des Ethylen-Vinylacetat-Copolymeres ≤ 85 Gew.-%, bezogen auf das Gesamtgewicht des Ethylen-Vinylacetat-Copolymers, beträgt.

Das EVM-Polymerblend kann beispielsweise mindestens ein Ethylen-Vinylacetat-Copolymer mit einem Vinylacetat-Anteil von ≥ 50 Gew.-% bis ≤ 85 Gew.-% oder ≤ 80 Gew.-%, bezogen auf das Gesamtgewicht des Ethylen-Vinylacetat-Copolymers, enthalten. Insbesondere kann das EVM-Polymerblend mindestens ein Ethylen-Vinylacetat-Copolymer mit einem Vinylacetat-Anteil von ≥ 55 Gew.-% oder ≥ 60 Gew.-% bis ≤ 85 Gew.-% oder ≤ 80 Gew.-% oder ≤ 75 Gew.-%, bezogen auf das Gesamtgewicht des Ethylen-Vinylacetat-Copolymers, enthalten. Derartige Vinylacetat-Anteile haben sich im Hinblick auf den geräuschmindernden Effekt und die Kälteflexibilität und damit auch die Laufeigenschaften des Wischgummis als besonders vorteilhaft erwiesen.

Beispielsweise kann das EVM-Polymerblend zwei oder mehr (unterschiedliche) Ethylen-Propylen-Dien-Kautschuke und/oder zwei oder mehr (unterschiedliche) Ethylen-Propylen-Kautschuke, beispielsweise mit unterschiedlichen Ethylenanteilen und/oder Propylenanteilen und/oder Termonomeranteilen und/oder Termonomeren, beispielsweise ausgewählt aus der Gruppe, bestehend aus Ethylidennorbornen (ENB), Vinylnorbornen (VNB), Dicyclopentadien (DCP), 1,4-Hexadien, und Mischungen davon, umfassen.

Alternativ oder zusätzlich dazu kann das EVM-Polymerblend zwei oder mehr Ethylen-Vinylacetat-Copolymere, beispielsweise mit unterschiedlichen Vinylacetat-Anteilen und/oder Ethylenanteilen, umfassen. Insofern das Polymerblend Ethylen-Vinylacetat-Copolymere mit unterschiedlichen Vinylacetat-Anteilen umfasst, können insbesondere alle Ethylen-Vinylacetat-Copolymere Vinylacetat-Anteile in einem oben genannten Bereich aufweisen.

Neben Ethylen-Propylen-Dien-Kautschuk/en und/oder Ethylen-Propylen-Kautschuk/en und Ethylen-Vinylacetat-Copolymer/en kann das EVM-Polymerblend grundsätzlich weiterhin noch eines oder mehrere andere Polymere, beispielsweise ausgewählt aus der Gruppe Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, umfassen.

Es ist jedoch auch möglich, dass das EVM-Polymerblend aus Ethylen-Propylen-Dien-Kautschuk/en und/oder Ethylen-Propylen-Kautschuk/en und Ethylen-Vinylacetat-Copolymer/en ausgebildet ist.

Das EVM-Polymerblend kann folglich grundsätzlich ein Polymerblend sein, welches mindestens einen Ethylen-Propylen-Dien-Kautschuk und/oder mindestens einen Ethylen-Propylen-Kautschuk und mindestens ein Ethylen-Vinylacetat-Copolymer umfasst oder daraus ausgebildet ist oder welches mindestens einen Ethylen-Propylen-Dien-Kautschuk und mindestens ein Ethylen-Vinylacetat-Copolymer umfasst oder daraus ausgebildet ist, oder welches mindestens einen Ethylen-Propylen-Kautschuk und mindestens ein Ethylen-Vinylacetat-Copolymer umfasst oder daraus ausgebildet ist.

Insbesondere kann das EVM-Polymerblend ein Polymerblend aus mindestens einem Ethylen-Propylen-Dien-Kautschuk (EPDM) und mindestens einem Ethylen-Vinylacetat-Copolymer (EVM) sein. Beispielsweise kann das EVM-Polymerblend ein Polymerblend (EPDM-EVM-Polymerblend) sein, welches aus mindestens einem Ethylen-Propylen-Dien-Kautschuk (EPDM) und mindestens einem Ethylen-Vinylacetat-Copolymer (EVM) ausgebildet ist. Durch Ethylen-Propylen-Dien-Kautschuk (EPDM) kann vorteilhafterweise ein höherer Vernetzungsgrad erzielt werden. Zudem kann Ethylen-Propylen-Dien-Kautschuk (EPDM) vorteilhafterweise sowohl durch Peroxide als auch durch Schwefel vernetzt werden und eine gute Verarbeitbarkeit aufweisen.

Das EVM-Polymerblend kann beispielsweise, bezogen auf das Gesamtgewicht der Polymere in dem Polymerblend, von ≥ 10 Gew.-% bis ≤ 95 Gew.-%, zum Beispiel von ≥ 30 Gew.-% bis ≤ 80 Gew.-%, Ethylen-Propylen-Dien-Kautschuk und/oder Ethylen-Propylen-Kautschuk (in Summe), insbesondere Ethylen-Propylen-Dien-Kautschuk (in Summe), enthalten. Bezogen auf das Gesamtgewicht der Polymere in dem Polymerblend, kann das EVM-Polymerblend beispielsweise von ≥ 5 Gew.-% bis ≤ 90 Gew.-%, insbesondere von ≥ 20 Gew.-% bis ≤ 70 Gew.-%, Ethylen-Vinylacetat-Copolymer (in Summe) enthalten. Das Gewichtsverhältnis von Ethylen-Propylen-Dien-Kautschuk und/oder Ethylen-Propylen-Kautschuk (in Summe), insbesondere von Ethylen-Propylen-Dien-Kautschuk (in Summe), zu Ethylen-Vinylacetat-Copolymer (in Summe) kann in dem Polymerblend zum Beispiel in einem Bereich von 90:10 bis 5:95, zum Beispiel in einem Bereich von 70:30 bis 20:80, liegen.

Das EVM-Polymerblend kann beispielsweise, bezogen auf das Gesamtgewicht der Polymere in dem Polymerblend, von ≥ 30 Gew.-% bis ≤ 60 Gew.-% Ethylen-Vinylacetat-Copolymer (in Summe) enthalten. Insbesondere kann das EVM-Polymerblend, bezogen auf das Gesamtgewicht der Polymere in dem Polymerblend, von ≥ 35 Gew.-% bis ≤ 55 Gew.-% Ethylen-Vinylacetat-Copolymer (in Summe) enthalten. Derartige Ethylen-Vinylacetat-Copolymer-Anteile haben sich im Hinblick auf den geräuschmindernden Effekt und die Formstabilität, insbesondere die Hitzebeständigkeit, des Wischgummis als besonders vorteilhaft erwiesen.

Insbesondere kann das EVM-Polymerblend dabei, bezogen auf das Gesamtgewicht der Polymere in dem Polymerblend, von ≥ 40 Gew.-% bis ≤ 70 Gew.-%, beispielsweise von ≥ 45 Gew.-% bis ≤ 65 Gew.-%, Ethylen-Propylen-Dien-Kautschuk und/oder Ethylen-Propylen-Kautschuk (in Summe), insbesondere Ethylen-Propylen-Dien-Kautschuk (in Summe), enthalten.

Das Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu Ethylen-Vinylacetat-Copolymer (in Summe) kann in dem EVM-Polymerblend zum Beispiel in einem Bereich von 70:30 bis 40:60 liegen. Insbesondere kann das Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu Ethylen-Vinylacetat-Copolymer (in Summe) in dem EVM-Polymerblend in einem Bereich von in einem Bereich von 65:35 bis 45:55 liegen. Derartige Gewichtsverhältnisse haben sich unter Anderem zur Gewährleistung einer guten Phasen-Interaktion als besonders vorteilhaft erwiesen.

Im Rahmen einer Ausgestaltung ist die Wischlippe teilweise oder vollständig aus einem unterschiedlichen Elastomermaterial ausgebildet als der Kippsteg und gegebenenfalls der Befestigungsabschnitt. Insbesondere kann dabei die Wischlippenspitze aus einem unterschiedlichen Elastomermaterial ausgebildet sein als der Kippsteg und gegebenenfalls der Befestigungsabschnitt. Der Wischlippenkopf kann dabei zumindest teilweise aus dem gleichen Elastomermaterial ausgebildet sein wie der Kippsteg und gegebenenfalls der Befestigungsabschnitt und gegebenenfalls zumindest teilweise aus dem gleichen Elastomermaterial wie die Wischlippenspitze.

Im Rahmen einer Variante dieser Ausgestaltung ist das Elastomermaterial der Wischlippe, insbesondere der Wischlippenspitze, im Hinblick auf Dämpfung und damit verbundene Geräuschminimierung optimiert, wohingegen das Elastomermaterial des Kippstegs und gegebenenfalls des Befestigungsabschnitts sowie gegebenenfalls des Wischlippenkopfes im Hinblick auf eine andere Eigenschaft, beispielsweise die Kälteflexibilität und/oder Hitzebeständigkeit, hin optimiert sein kann.

Dabei kann das Elastomermaterial der Wischlippe, insbesondere der Wischlippenspitze, ein EP(D)M-NOR/TOR/PIB/CR/IIR/CIIR/BIIR-Polymerblend umfassen. Das Elastomermaterial des Kippstegs und gegebenenfalls Befestigungsabschnitts sowie gegebenenfalls des Wischlippenkopfes kann dabei ein von dem Elastomermaterial der Wischlippe unterschiedliches Polymermaterial, beispielsweise reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, oder ein EP(D)M-EVM-Polymerblend oder ein EP(D)M-NOR/TOR/PIB/CR/IIR/CIIR/BIIR-EVM-Polymerblend, umfassen.

Durch den Einsatz eines EP(D)M-NOR/TOR/PIB/CR/IIR/CIIR/BIIR-Polymerblend in der Wischlippe, insbesondere Wischlippenspitze, kann dabei vorteilhafterweise eine Dämpfung und damit verbundene Geräuschminimierung durch die Wischlippe, insbesondere Wischlippenspitze, erzielt werden.

Dadurch, dass der Kippsteg und gegebenenfalls der Befestigungsabschnitt sowie gegebenenfalls der Wischlippenkopf, beispielsweise reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, oder ein EP(D)M-EVM-Polymerblend oder ein EP(D)M-NOR/TOR/PIB/CR/IIR/CIIR/BIIR-EVM-Polymerblend, insbesondere mit einem geringen Vinylacetat-Anteil, umfasst, kann vorteilhafterweise ebenfalls die Kälteflexibilität und/oder Hitzebeständigkeit verbessert werden.

Im Rahmen einer anderen, umgekehrten Variante dieser Ausgestaltung ist das Elastomermaterial des Kippstegs und/oder des Befestigungsabschnitts und/oder des Wischlippenkopfes im Hinblick auf Dämpfung und damit verbundene Geräuschminimierung und gegebenenfalls Kälteflexibilität und/oder Hitzebeständigkeit optimiert, wohingegen das Elastomermaterial der Wischlippe, insbesondere der Wischlippenspitze, im Hinblick auf eine andere Eigenschaft, beispielsweise Reibung, hin optimiert sein kann.

Dabei kann das Elastomermaterial des Kippstegs und gegebenenfalls Befestigungsabschnitts sowie gegebenenfalls des Wischlippenkopfes ein EP(D)M-NOR/TOR/PIB/CR/IIR/CIIR/BIIR-Polymerblend umfassen. Das Elastomermaterial der Wischlippe, insbesondere der Wischlippenspitze, kann dabei ein von dem Elastomermaterial der Wischlippe unterschiedliches Polymermaterial, beispielsweise reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, oder ein EP(D)M-EVM-Polymerblend oder ein EP(D)M-NOR/TOR/PIB/CR/IIR/CIIR/BIIR-EVM-Polymerblend, umfassen.

Durch den Einsatz des EP(D)M-NOR/TOR/PIB/CR/IIR/CIIR/BIIR-Polymerblends in dem Kippsteg und gegebenenfalls dem Befestigungsabschnitt sowie gegebenenfalls dem Wischlippenkopf, kann dabei vorteilhafterweise eine Dämpfung und damit verbunden eine Geräuschminimierung durch den Kippsteg und gegebenenfalls Befestigungsabschnitt sowie gegebenenfalls Wischlippenkopf erzielt werden.

Das Elastomermaterial der Wischlippe, insbesondere der Wischlippenspitze kann dabei ein anderes Polymermaterial, beispielsweise reinen beziehungsweise ungeblendeten beziehungsweise nicht mit anderen Polymeren geblendeten Ethylen-Propylen-Dien-Kautschuk und/oder Ethylen-Propylen-Kautschuk (EP(D)M), insbesondere Ethylen-Propylen-Dien-Kautschuk, oder ein EP(D)M-EVM-Polymerblend oder ein EP(D)M-NOR/TOR/PIB/CR/IIR/CIIR/BIIR-EVM-Polymerblend, umfassen.

Hinsichtlich weiterer technischer Merkmale und Vorteile des erfindungsgemäßen Wischgummis wird hiermit explizit auf die Erläuterungen im Zusammenhang mit dem erfindungsgemäßen Elastomermaterial und dem erfindungsgemäßen Scheibenwischer sowie auf die Figuren und die Figurenbeschreibung verwiesen.

Ein weiterer Gegenstand ist ein Elastomermaterial für ein Wischgummi, insbesondere für einen Scheibenwischer, beispielsweise eines Kraftfahrzeugs, welches durch Mischen von mindestens einem Ethylen-Propylen-Dien-Kautschuk und/oder mindestens einem Ethylen-Propylen-Kautschuk und mindestens einem Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, zu einem Polymerblend erhältlich ist sowie ein entsprechendes Herstellungsverfahren.

Dabei können der mindestens eine Ethylen-Propylen-Dien-Kautschuk und/oder der mindestens eine Ethylen-Propylen-Kautschuk und das mindestens eine Polymer insbesondere in einem Gewichtsverhältnis von Ethylen-Propylen-Dien-Kautschuk und/oder Ethylen-Propylen-Kautschuk (in Summe), insbesondere Ethylen-Propylen-Dien-Kautschuk (in Summe), zu dem mindestens einen Polymer, insbesondere dem Gesamtgewicht des mindestens einen Polymers, in einem Bereich von 40:60 bis 95:5 eingesetzt werden.

Im Rahmen einer Ausführungsform wird Polynorbornen als Polynorbornen/Öl-Gemisch eingesetzt.

Im Rahmen einer weiteren Ausführungsform wird als Öl des Polynorbornen/Öl-Gemischs mindestens ein Weichmacheröl mit einem Pourpoint in einem Bereich von ≥ -25 °C bits ≤ +25 °C eingesetzt und/oder weiterhin mindestens ein Weichmacheröl, insbesondere mit einem Pourpoint in einem Bereich von ≥-25 °C bis ≥ +25 °C, zugemischt.

Insbesondere können dabei insgesamt pro 100 Gewichtsteile des Polymerblends (EP(D)M-NOR/TOR/PIB/CR/IIR/CIIR/BIIR-Polymerblends) ≥ 5 Gewichtsteile bis ≤ 80 Gewichtsteile (Weichmacher-)Öl eingesetzt werden.

Im Rahmen einer weiteren Ausführungsform wird weiterhin Ruß zugemischt. Insbesondere können dabei pro 100 Gewichtsteile des Polymerblends (EP(D)M-NOR/TOR/PIB/CR/IIR/CIIR/BIIR-Polymerblends) von ≥ 30 Gewichtsteile oder ≥ 35 Gewichtsteile bis ≤ 90 Gewichtsteile oder ≤ 85 Gewichtsteile oder ≤ 80 Gewichtsteile oder ≤ 75 Gewichtsteile Ruß zugemischt werden. Das Gewichtsverhältnis von Ruß zu (Weichmacher-)Öl kann dabei insbesondere in einem Bereich von 90:10 bis 50:50 liegen.

Darüber hinaus kann das Elastomermaterial (EP(D)M-NOR/TOR/PIB/CR/IIR/CIIR/BIIR-Polymerblend-Elastomermaterial) Gleitmittel, Vernetzungsmittel, Vernetzungsbeschleuniger, Schwefel und/oder Schwefeldonor/en und/oder Peroxid/e, Vernetzungscoagenzien, sonstige Weichmacher, weiße Füllstoffe, Pigmente, Färbemittel, Antidegradanten, Aktivatoren, wie zum Beispiel Zinkoxid, Magnesiumoxid und/oder Stearinsäure, Prozesshilfsstoffe, und/oder Feuchteabsorber, wie zum Beispiel Calciumoxid, enthalten.

Hinsichtlich weiterer technischer Merkmale und Vorteile des erfindungsgemäßen Elastomermaterials wird hiermit explizit auf die Erläuterungen im Zusammenhang mit dem erfindungsgemäßen Wischgummi und dem erfindungsgemäßen Scheibenwischer sowie auf die Figuren und die Figurenbeschreibung verwiesen.

Ferner betrifft die Erfindung einen Scheibenwischer, welcher ein erfindungsgemäßes Wischgummi und/oder ein erfindungsgemäßes Elastomermaterial umfasst.

Hinsichtlich weiterer technischer Merkmale und Vorteile des erfindungsgemäßen Scheibenwischers wird hiermit explizit auf die Erläuterungen im Zusammenhang mit dem erfindungsgemäßen Wischgummi und dem erfindungsgemäßen Elastomermaterial sowie auf die Figuren und die Figurenbeschreibung verwiesen.

### Zeichnungen

Weitere Vorteile und vorteilhafte Ausgestaltungen der erfindungsgemäßen Gegenstände werden durch die Zeichnungen und Beispiele veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform eines erfindungsgemäßen Wischgummis;
- Fig. 2: einen schematischen Querschnitt durch eine zweite Ausführungsform eines erfindungsgemäßen Wischgummis;
- Fig. 3: einen schematischen Querschnitt durch eine dritte Ausführungsform eines erfindungsgemäßen Wischgummis;
- Fig. 4: einen schematischen Querschnitt durch eine vierte Ausführungsform eines erfindungsgemäßen Wischgummis und
- Fig. 5: einen schematischen Querschnitt durch eine fünfte Ausführungsform eines erfindungsgemäßen Wischgummis.

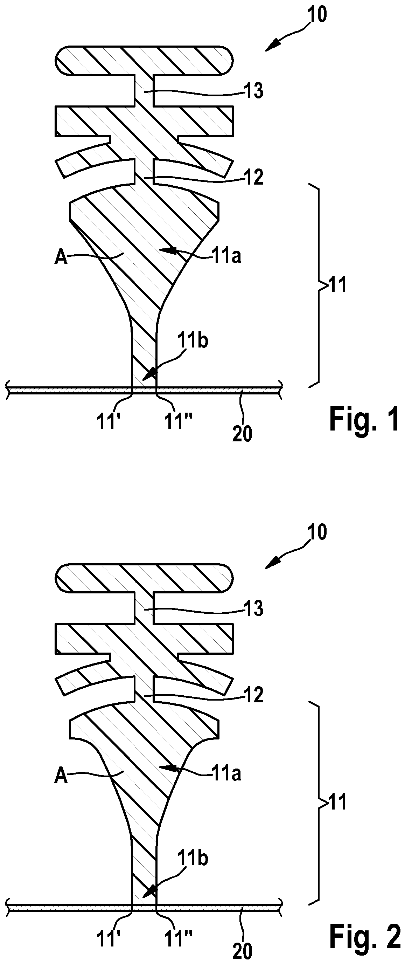

Die Figuren 1 bis 5 veranschaulichen, dass die darin gezeigten Ausführungsformen von Wischgummis 10 jeweils eine Wischlippe 11, einen Kippsteg 12 und einen Befestigungsabschnitt 13 aufweisen. Die Wischlippe 11 hat dabei einen Wischlippenkopf 11 a und eine Wischlippenspitze 11 b. Die Wischlippenspitze 11 b weist dabei zwei Wischkanten 11',11" auf, welche während der Wischbewegung über die zu wischende Scheibe 20 streichen und dabei Wasser von der Scheibe 20 schieben. Die Wischlippenspitze 11 b ist mit dem Wischlippenkopf 11a verbunden, welcher 11a wiederum über den Kippsteg 12 mit dem Befestigungsabschnitt 13 verbunden ist, so dass die gesamte Wischlippe 11 während der Wischbewegung um den Kippsteg 12 verkippt werden kann.

Bei den in den Figuren 1 bis 3 gezeigten Ausführungsformen ist das komplette Wischgummi 10 aus einem Elastomermaterial A ausgebildet, welches ein Polymerblend aus mindestens einem Ethylen-Propylen-Dien-Kautschuk (EPDM) und/oder mindestens einem Ethylen-Propylen-Kautschuk (EPM) und mindestens einem Polymer, ausgewählt aus der Gruppe bestehend aus Polynorbornen (NOR), *trans*-Polyoctenamer (TOR), Polyisobutylen (PIB), Chloropren-Kautschuk (CR), Butyl-Kautschuk (IIR), Chlorbutyl-Kautschuk (CIIR), Brombutyl-Kautschuk (BIIR) und Mischungen davon, umfasst.

Die in Figur 2 gezeigte Ausführungsform unterscheidet sich im Wesentlichen dadurch von der in Figur 1 gezeigten Ausführungsform, dass sich der Wischlippenkopf 11a stärker in Richtung auf die Wischlippenspitze 11b verjüngt als in der in Figur 1 gezeigten Ausführungsform.

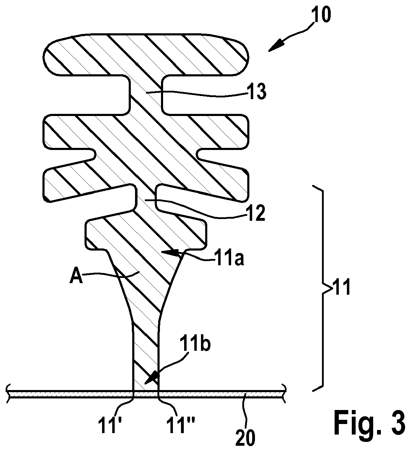

Die in Figur 3 gezeigte Ausführungsform unterscheidet sich im Wesentlichen dadurch von der in Figur 2 gezeigten Ausführungsform, dass der Wischlippenkopf 11a schmaler und die Wischlippe 11 insgesamt kürzer beziehungsweise weniger hoch als in der in Figur 2 gezeigten Ausführungsform ist.

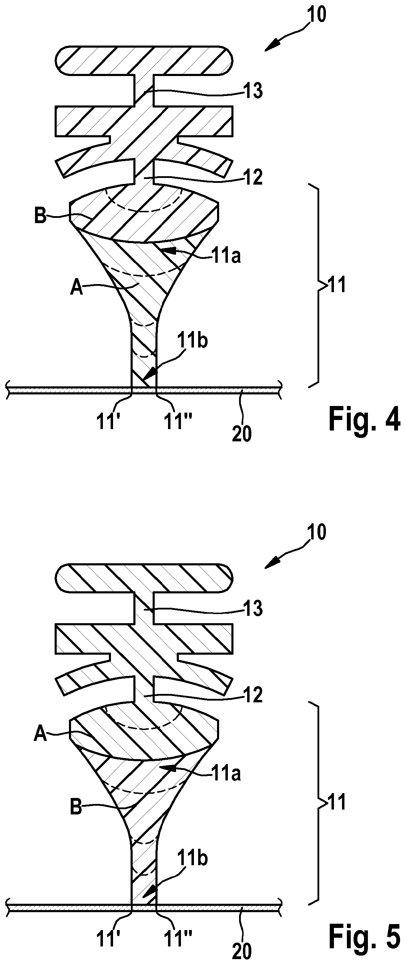

Bei den in den Figuren 4 und 5 gezeigten Ausführungsformen ist das Wischgummi 10 aus zwei unterschiedlichen Elastomermaterialien A,B ausgebildet. Bei der in Figur 4 gezeigten Ausführungsform ist die Wischlippenspitze 11 b aus dem Elastomermaterial A und der Wischlippenkopf 11a, der Kippsteg 12 und der Befestigungsabschnitt 13 aus einem weiteren Elastomermaterial B ausgebildet. Umgekehrt dazu ist in der in Figur 5 gezeigten Ausführungsform der Wischlippenkopf 11a, der Kippsteg 12 und der Befestigungsabschnitt 13 aus der Elastomermaterial A und die Wischlippenspitze 11 b aus dem weiteren, unterschiedlichen Elastomermaterial B ausgebildet. Die gestrichelten Linien deuten an, dass der Verbindungsbereich zwischen dem Elastomermaterial A und dem Elastomermaterial B auch näher an der Wischlippenspitze 11 b oder näher am Kippsteg 12 ausgebildet sein kann. Je nach Ausgestaltung kann dabei nur ein Teil der Wischlippenspitze 11 b aus dem einen Elastomermaterial A,B und der andere Teil der Wischlippenspitze 11 b zusammen mit dem Wischlippenkopf 11a, dem Kippsteg 12 und dem Befestigungsabschnitt 13 aus dem weiteren, unterschiedlichen Elastomermaterial B,A; oder die Wischlippenspitze 11 b und nur ein Teil des Wischlippenkopfes 11 b aus dem einen Elastomermaterial A,B und der andere Teil des Wischlippenkopfes 11a zusammen mit dem Kippsteg 12 und dem Befestigungsabschnitt 13 aus dem weiteren, unterschiedlichen Elastomermaterial B,A ausgebildet sein.

Bei den in den Figuren 4 und 5 gezeigten Ausführungsformen umfasst das Elastomermaterial A ebenso wie das Elastomermaterial A der in den Figuren 1 bis 3 gezeigten Ausführungsformen ein EP(D)M-NOR/TOR/PIB/CR/IIR/CIIR/BIIR-Polymerblend. Die weitere Elastomerkomponente B kann dabei zum Beispiel Ethylen-Propylen-Dien-Kautschuk (EPDM) und/oder Ethylen-Propylen-Kautschuk (EPM) oder ein EP(D)M-EVM-Polymerblend oder ein EP(D)M-NOR/TOR/PIB/CR/IIR/CIIR/BIIR-EVM-Polymerblend sein.

## Patentansprüche

1. Wischgummi, insbesondere für einen Scheibenwischer, beispielsweise eines Kraftfahrzeugs, umfassend ein Elastomermaterial, welches ein Polymerblend aus mindestens einem Ethylen-Propylen-Dien-Kautschuk und/oder mindestens einem Ethylen-Propylen-Kautschuk und mindestens einem Polymer, ausgewählt aus der Gruppe bestehend aus Polynorbornen, *trans-*Polyoctenamer, Polyisobutylen, Chloropren-Kautschuk, Butyl-Kautschuk, Chlorbutyl-Kautschuk, Brombutyl-Kautschuk und Mischungen davon, umfasst,
wobei in dem Polymerblend das Gewichtsverhältnis von Ethylen-Propylen-Dien-Kautschuk und/oder Ethylen-Propylen-Kautschuk zu dem mindestens einen Polymer in einem Bereich von 40:60 bis 95:5 liegt.

2. Wischgummi (10) nach Anspruch 1, wobei in dem Polymerblend das Gewichtsverhältnis von Ethylen-Propylen-Dien-Kautschuk und/oder Ethylen-Propylen-Kautschuk zu dem mindestens einen Polymer in einem Bereich von 50:50 bis 95:5 liegt.

3. Wischgummi (10) nach Anspruch 1 oder 2, wobei das Polynorbornen ein Polynorbornen/Öl-Gemisch ist, insbesondere wobei das Öl des Polynorbornen/Öl-Gemischs ein Weichmacheröl oder Weichmacherölgemisch mit einem Pourpoint in einem Bereich von ≥ -25 °C bis ≤ +25 °C ist.

4. Wischgummi (10) nach einem der Ansprüche 1 bis 3, wobei das Polyisobutylen ein Molekulargewicht von ≥ 100.000 g/mol aufweist.

5. Wischgummi (10) nach einem der Ansprüche 1 bis 4, wobei das Polymerblend ein Polymerblend aus mindestens einem Ethylen-Propylen-Dien-Kautschuk und mindestens einem Polymer, ausgewählt aus der Gruppe bestehend aus Polynorbornen, *trans*-Polyoctenamer, Polyisobutylen, Chloropren-Kautschuk, Butyl-Kautschuk, Chlorbutyl-Kautschuk, Brombutyl-Kautschuk und Mischungen davon, ist.

6. Wischgummi (10) nach einem der Ansprüche 1 bis 5, wobei das mindestens eine Polymer, ausgewählt ist aus der Gruppe bestehend aus Polynorbornen, *trans*-Polyoctenamer, Polyisobutylen und Mischungen davon.

7. Wischgummi (10) nach einem der Ansprüche 1 bis 6, wobei das Elastomermaterial (A) weiterhin Ruß enthält, insbesondere wobei das Elastomermaterial (A) pro 100 Gewichtsteile des Polymerblends von ≥ 30 Gewichtsteile bis ≥ 90 Gewichtsteile Ruß enthält.

8. Wischgummi (10) nach einem der Ansprüche 1 bis 7, wobei das Elastomermaterial (A) weiterhin mindestens ein Weichmacheröl mit einem Pourpoint in einem Bereich von ≥ -25 °C bis ≤ +25 °C aufweist, insbesondere wobei das Elastomermaterial (A) pro 100 Gewichtsteile des Polymerblends ≥ 5 Gewichtsteile bis ≤ 80 Gewichtsteile Öl enthält, insbesondere wobei das Gewichtsverhältnis von Ruß zu Öl in einem Bereich von 90:10 bis 50:50 liegt.

9. Wischgummi (10) nach einem der Ansprüche 1 bis 8, wobei das Wischgummi (10) eine Wischlippe (11), einen Kippsteg (12) und einen Befestigungsabschnitt (13) aufweist, wobei die Wischlippe (11) mit dem Kippsteg (12) und der Kippsteg (12) mit dem Befestigungsbachschnitt (13) verbunden ist,
wobei die Wischlippe (11) zumindest teilweise aus dem Elastomermaterial (A) ausgebildet ist, und/oder
wobei der Kippsteg (12) und/oder der Befestigungsabschnitt (13) aus dem Elastomermaterial (A) ausgebildet ist.

10. Wischgummi (10) nach einem der Ansprüche 1 bis 9, wobei das Wischgummi (10) mindestens ein weiteres Elastomermaterial (B) umfasst, insbesondere welches mindestens einen Ethylen-Propylen-Dien-Kautschuk und/oder mindestens einen Ethylen-Propylen-Kautschuk oder ein unterschiedliches Polymerblend aus mindestens einem Ethylen-Propylen-Dien-Kautschuk und/oder mindestens einem Ethylen-Propylen-Kautschuk und mindestens einem weiteren Polymer, insbesondere ausgewählt aus der Gruppe bestehend aus Ethylen-Vinylacetat-Copolymer, Polynorbornen, *trans*-Polyoctenamer, Polyisobutylen, Chloropren-Kautschuk, Butyl-Kautschuk, Chlorbutyl-Kautschuk, Brombutyl-Kautschuk und Mischungen davon, umfasst.

11. Scheibenwischer umfassend ein Wischgummi (10) nach einem der Ansprüche 1 bis 10.

## Claims

1. Wiper rubber, in particular for a windshield wiper, for example of a motor vehicle, comprising an elastomer material which comprises a polymer blend of at least one ethylene/propylene/diene rubber and/or at least one ethylene/propylene rubber and at least one polymer chosen from the group consisting of polynorbornene, *trans-*polyoctenamer, polyisobutylene, chloroprene rubber, butyl rubber, chlorobutyl rubber, bromobutyl rubber and mixtures thereof,
in which, in the polymer blend, the ratio by weight of ethylene/propylene/diene rubber and/or ethylene/propylene rubber to the at least one polymer lies in a region from 40:60 to 95:5.

2. Wiper rubber (10) according to Claim 1, in which, in the polymer blend, the ratio by weight of ethylene/propylene/diene rubber and/or ethylene/propylene rubber to the at least one polymer lies in a region from 50:50 to 95:5.

3. Wiper rubber (10) according to Claim 1 or 2, in which the polynorbornene is a polynorbornene/oil mixture in particular in which the oil of the polynorbornene/oil mixture is a plasticizer oil or plasticizer oil mixture with a pour point in a region from ≥ -25°C to ≤ +25°C.

4. Wiper rubber (10) according to one of Claims 1 to 3, in which the polyisobutylene exhibits a molecular weight of ≥ 100 000 g/mol.

5. Wiper rubber (10) according to one of Claims 1 to 4, in which the polymer blend is a polymer blend of at least one ethylene/propylene/diene rubber and at least one polymer chosen from the group consisting of polynorbornene, *trans*-polyoctenamer, polyisobutylene, chloroprene rubber, butyl rubber, chlorobutyl rubber, bromobutyl rubber and mixtures thereof.

6. Wiper rubber (10) according to one of Claims 1 to 5, in which the at least one polymer is chosen from the group consisting of polynorbornene, *trans*-polyoctenamer, polyisobutylene and mixtures thereof.

7. Wiper rubber (10) according to one of Claims 1 to 6, in which the elastomer material (A) furthermore comprises carbon black, in particular in which the elastomer material (A) comprises, per 100 parts by weight of the polymer blend, from ≥ 30 parts by weight to ≥ 90 parts by weight of carbon black.

8. Wiper rubber (10) according to one of Claims 1 to 7, in which the elastomer material (A) furthermore exhibits at least one plasticizer oil with a pour point in a region from ≥ -25°C to ≤ +25°C, in particular in which the elastomer material (A) comprises, per 100 parts by weight of the polymer blend, ≥ 5 parts by weight to ≥ 80 parts by weight of oil, in particular in which the ratio by weight of carbon black to oil lies in a region from 90:10 to 50:50.

9. Wiper rubber (10) according to one of Claims 1 to 8, the wiper rubber (10) exhibiting a wiper lip (11), a tilting web (12) and a fastening section (13), the wiper lip (11) being bonded to the tilting web (12) and the tilting web (12) being bonded to the fastening section (13),
the wiper lip (11) being at least partially formed from the elastomer material (A), and/or
the tilting web (12) and/or the fastening section (13) being formed form the elastomer material (A).

10. Wiper rubber (10) according to one of Claims 1 to 9, the wiper rubber (10) comprising at least one additional elastomer material (B), in particular which comprises at least one ethylene/propylene/diene rubber and/or at least one ethylene/propylene rubber or a different polymer blend of at least one ethylene/propylene/diene rubber and/or at least one ethylene/propylene rubber and at least one additional polymer, in particular chosen from the group consisting of ethylene/vinyl acetate copolymer, polynorbornene, *trans*-polyoctenamer, polyisobutylene, chloroprene rubber, butyl rubber, chlorobutyl rubber, bromobutyl rubber and mixtures thereof.

11. Windshield wiper, comprising a wiper rubber (10) according to one of Claims 1 to 10.

## Revendications

1. Lame d'essuyage, notamment pour un essuie-glace, par exemple d'une automobile, comprenant un matériau élastomère, qui comprend un mélange de polymères constitué d'au moins un caoutchouc d'éthylène-propylène-diène et/ou d'au moins un caoutchouc d'éthylène-propylène et d'au moins un polymère choisi dans le groupe constitué par le polynorbornène, le *trans*-polyocténamère, le polyisobutylène, le caoutchouc de chloroprène, le caoutchouc de butyle, le caoutchouc de chlorobutyle, le caoutchouc de bromobutyle et leurs mélanges,
le rapport en poids dans le mélange de polymères entre le caoutchouc d'éthylène-propylène-diène et/ou le caoutchouc d'éthylène-propylène et ledit au moins un polymère se situant dans une plage allant de 40:60 à 95:5.

2. Lame d'essuyage (10) selon la revendication 1, dans laquelle le rapport en poids dans le mélange de polymères entre le caoutchouc d'éthylène-propylène-diène et/ou le caoutchouc d'éthylène-propylène et ledit au moins un polymère se situe dans une plage allant de 50:50 à 95:5.

3. Lame d'essuyage (10) selon la revendication 1 ou 2, dans laquelle le polynorbornène est un mélange polynorbornène/huile, notamment dans laquelle l'huile du mélange polynorbornène/huile est une huile plastifiante ou un mélange d'huiles plastifiantes ayant un point d'écoulement dans une plage allant de ≥ -25 °C à ≤ +25 °C.

4. Lame d'essuyage (10) selon l'une quelconque des revendications 1 à 3, dans laquelle le polyisobutylène présente un poids moléculaire ≥ 100 000 g/mol.

5. Lame d'essuyage (10) selon l'une quelconque des revendications 1 à 4, dans laquelle le mélange de polymères est un mélange de polymères constitué d'au moins un caoutchouc d'éthylène-propylène-diène et d'au moins un polymère choisi dans le groupe constitué par le polynorbornène, le *trans*-polyocténamère, le polyisobutylène, le caoutchouc de chloroprène, le caoutchouc de butyle, le caoutchouc de chlorobutyle, le caoutchouc de bromobutyle et leurs mélanges.

6. Lame d'essuyage (10) selon l'une quelconque des revendications 1 à 5, dans laquelle ledit au moins un polymère est choisi dans le groupe constitué par le polynorbornène, le *trans*-polyocténamère, le polyisobutylène et leurs mélanges.

7. Lame d'essuyage (10) selon l'une quelconque des revendications 1 à 6, dans laquelle le matériau élastomère (A) contient en outre du noir de carbone, notamment dans laquelle le matériau élastomère (A) contient, pour 100 parties en poids du mélange de polymères, de ≥ 30 parties en poids à ≤ 90 parties en poids de noir de carbone.

8. Lame d'essuyage (10) selon l'une quelconque des revendications 1 à 7, dans laquelle le matériau élastomère (A) comprend en outre au moins une huile plastifiante ayant un point d'écoulement dans une plage allant de ≥ -25 °C à ≤ +25 °C, notamment dans laquelle le matériau élastomère (A) contient, pour 100 parties en poids du mélange de polymères, de ≥ 5 parties en poids à ≤ 80 parties en poids d'huile, notamment dans laquelle le rapport en poids entre le noir de carbone et l'huile se situe dans une plage allant de 90:10 à 50:50.

9. Lame d'essuyage (10) selon l'une quelconque des revendications 1 à 8, dans laquelle la lame d'essuyage (10) comprend une lèvre d'essuyage (11), une barrette de basculement (12) et une section de fixation (13), la lèvre d'essuyage (11) étant reliée avec la barrette de basculement (12) et la barrette de basculement (12) avec
la section de fixation (13),
la lèvre d'essuyage (11) étant configurée au moins en partie à base du matériau élastomère (A) et/ou la barrette de basculement (12) et/ou la section de fixation (13) étant configurées à base du matériau élastomère (A).

10. Lame d'essuyage (10) selon l'une quelconque des revendications 1 à 9, dans laquelle la lame d'essuyage (10) comprend au moins un matériau élastomère supplémentaire (B), notamment qui comprend au moins un caoutchouc d'éthylène-propylène-diène et/ou au moins un caoutchouc d'éthylène-propylène ou un mélange de polymères différent constitué d'au moins un caoutchouc d'éthylène-propylène-diène et/ou d'au moins un caoutchouc d'éthylène-propylène et d'au moins un autre polymère, notamment choisi dans le groupe constitué par le copolymère d'éthylène-acétate de vinyle, le polynorbornène, le *trans*-polyocténamère, le polyisobutylène, le caoutchouc de chloroprène, le caoutchouc de butyle, le caoutchouc de chlorobutyle, le caoutchouc de bromobutyle et leurs mélanges.

11. Essuie-glace comprenant une lame d'essuyage (10) selon l'une quelconque des revendications 1 à 10.
